# EUROPÄISCHE PATENTSCHRIFT

(11) **EP 1 495 457 B1**
(45) Veröffentlichungstag und Bekanntmachung des Hinweises auf die Patenterteilung: **02.07.2008**
(21) Anmeldenummer: 03720275.1
(22) Anmeldetag: 16.04.2003
(51) Int. Cl.: G08G 5/04

(54) **SICHERHEITTSSYSTEM FUR LUFTFAHRZEUGE**
SAFETY SYSTEM FOR AIRCRAFT
SYSTEME DE SECURITE DESTINE A DES AERONEFS

(30) Priorität: 18.04.2002 DE 10217222
(43) Veröffentlichungstag der Anmeldung: 12.01.2005
(73) Patentinhaber: Diehl Aerospace GmbH, 88662 Überlingen (DE)
(72) Erfinder: VIEBAHN, Harro, Von, 64392 Modautal (DE); SCHIEFELE, Jens, 65207 Wiesbaden (DE)
(74) Vertreter: Katscher Habermann Patentanwälte
(86) Internationale Anmeldenummer: PCT/DE2003/001244
(87) Internationale Veröffentlichungsnummer: WO 2003/088181

(56) Entgegenhaltungen:
- WO-A-96/05562
- WO-A-03/038471
- DE-A- 10 146 167
- US-A- 5 488 563
- US-B1- 6 201 482

## Beschreibung

### Technisches Gebiet

Die Erfindung betrifft ein Sicherheitssystem für Luftfahrzeuge.

Aufgabe der vorliegenden Erfindung ist es, einen Missbrauch von Luftfahrzeugen, beispielsweise durch einen gewaltsam verursachten Absturz auf ein Ziel, zu verhindern.

### Stand der Technik

Durch DE 196 09 613 A1 ist ein Verfahren zur Erkennung eines Kollisionsrisikos und zur Vermeidung von Kollisionen in der Luftfahrt bekannt geworden, bei dem Aufenthaltswahrscheinlichkeiten des eigenen und anderer Luftfahrzeuge in Raumelementen berechnet werden und die Wahrscheinlichkeiten des gleichzeitigen Aufenthalts des eigenen und eines anderen Luftfahrzeugs in jeweils einem der Raumelemente bestimmt werden. Die bestimmte Wahrscheinlichkeit (Kollisionswahrscheinlichkeit) führt zu einer Berechnung einer Ausweichroute, wenn sie einen vorgegebenen Wert übersteigt. Die Ausweichrouten werden dem Piloten vorgeschlagen, so dass dieser über die Befolgung der Vorschläge entscheiden kann.

### Darstellung der Erfindung

Diese Aufgabe wird gelöst durch ein Sicherheitssystem für Luftfahrzeuge, wobei in einem digital gespeicherten Abbild des Luftraums verbotene Lufträume gekennzeichnet sind, in die Luftfahrzeuge nicht eindringen dürfen, wobei das Luftfahrzeug mit einer automatischen Steuerungseinrichtung versehen ist, wobei die Steuerungseinrichtung bei Annäherung an einen verbotenen Luftraum das Luftfahrzeug automatisch auf eine Ausweichroute steuert, die außerhalb des verbotenen Luftraums liegt, und wobei die Höhe des verbotenen Luftraums größer als die von dem Luftfahrzeug erreichbare Höhe ist.

Mit dem erfindungsgemäßen Sicherheitssystem kann verhindert werden, dass ein Luftfahrzeug in den Luftraum über besonders gefährdeten Gebieten - im folgenden auch verbotene Gebiete genannt - eindringt. Diese verbotenen Gebiete können beispielsweise Großstädte, Kernkraftwerke oder einzelne besonders gefährdete Gebäude oder Industrieanlagen sein.

Das erfindungsgemäße Sicherheitssystem kann ständig aktiviert sein. Um bei einem unbeabsichtigten gegebenenfalls nur marginal erfolgenden oder zulässigen Eindringen in den verbotenen Luftraum eine unerwünschte automatische Steuerung zu verhindern, kann bei einer Weiterbildung des erfindungsgemäßen Systems vorgesehen sein, dass die automatische Steuerung nur nach Eingabe eines Befehls oder Betätigung einer Eingabevorrichtung aktiviert wird und dass eine Deaktivierung der automatischen Steuerung nur in gesicherter Weise möglich ist.

Dabei sind in vorteilhafter Weise die Mittel zur Eingabe des Befehls derart zu gestalten, dass im Falle einer Bedrohung durch Luftpiraten der Befehl von der Besatzung noch eingegeben werden kann. Die Sicherung der Deaktivierung kann beispielsweise durch Eingabe eines Codewortes erfolgen. Im Falle das dies nicht sicher genug erscheint und von Angreifern möglicherweise eine Deaktivierung erzwungen werden kann, ist bei einer Ausgestaltung der Weiterbildung vorgesehen, dass eine Deaktivierung der automatischen Steuerung nur durch eine außerhalb des Luftfahrzeugs befindliche Einrichtung möglich ist oder nur erfolgen kann, wenn sich das Luftfahrzeug am Boden befindet. Dies kann beispielsweise durch Einfedern der Radaufhängung festgestellt werden.

Eine andere Weiterbildung des erfindungsgemäßen Sicherheitssystem besteht darin, dass die automatische Steuerung eine automatische Landung einschließt. Dabei ist vorzugsweise vorgesehen, dass der Ort der automatischen Landung von einer außerhalb des Luftfahrzeugs befindlichen Einrichtung vorgebbar ist. Um auch bereits vor der Landung die weitere Bewegung des Luftfahrzeugs kontrollieren zu können, ohne auf eine Automatik angewiesen zu sein, kann gemäß einer anderen Weiterbildung vorgesehen sein, dass die Steuerung auf der Ausweichroute von einer außerhalb des Luftfahrzeugs befindlichen Einrichtung übernehmbar ist.

Eine weitere vorteilhafte Ausgestaltung des erfindungsgemäßen Sicherheitssystem besteht darin, dass bei einer Aktivierung der automatischen Steuerung eine Nachricht an eine Einrichtung zur Flugsicherung gesendet wird. Dadurch werden Flugsicherungseinrichtungen in die Lage versetzt, Maßnahmen zur Sicherung des Luftraums, in welchem sich das automatisch auf eine Ausweichroute gesteuerte Luftfahrzeug befindet, zu ergreifen - beispielsweise andere Luftfahrzeuge zu warnen oder umzuleiten.

Um bei der automatischen Steuerung des Luftfahrzeugs auf die Ausweichroute eine Gefährdung von anderen beweglichen Objekten (Luftfahrzeugen) zu verhindern, kann vorgesehen sein, dass eine automatische Steuerung ebenfalls erfolgt, wenn eine Annäherung an bewegliche Objekte stattfindet.

Eine andere Weiterbildung besteht darin, dass das Luftfahrzeug ferner bei Annäherung an andere Objekte, insbesondere andere Luftfahrzeuge, automatisch auf eine Ausweichroute gesteuert wird. Dazu werden Informationen über die Positionen und gegebenenfalls Bewegungsrichtungen und -geschwindigkeiten zwischen den Luftfahrzeugen über geeignete Datenkanäle bzw. Funkverbindungen zwischen den Luftfahrzeugen übertragen.

Ein Verfahren zur Erkennung eines Kollisionsrisikos in der Luftfahrt ist in EP 0 886 847 B1 und in US 6,201,482 B1 beschrieben. Dieses Verfahren ist in vorteilhafter Weise für das erfindungsgemäße Sicherheitssystem geeignet, wozu im Einzelnen vorgesehen ist,
- dass der Luftraum in vorgegebene Raumelemente eingeteilt ist,
- dass für das Luftfahrzeug Wahrscheinlichkeiten berechnet werden, mit welchen sich das Luftfahrzeug zu mehreren ausgewählten Zeitpunkten in vorgegebenen Raumelementen befinden wird (Aufenthaltswahrscheinlichkeiten),
- dass aus den Aufenthaltswahrscheinlichkeiten des eigenen Luftfahrzeugs und aus auf Eins gesetzten Aufenthaltswahrscheinlichkeiten der Raumelemente des verbotenen Luftraums die Wahrscheinlichkeiten des Aufenthalts des eigenen Luftfahrzeugs in jeweils einem Raumelement (Kollisionswahrscheinlichkeiten) für die vorgegebenen Raumelemente und die ausgewählten Zeitpunkte berechnet werden und
- dass eine Ausweichroute berechnet wird, wenn für mindestens ein Raumelement die Kollisionswahrscheinlichkeit einen vorgegebenen Wert übersteigt.

Bei dieser Weiterbildung des erfindungsgemäßen Sicherheitssystems ist eine vorteilhafte Berechnung von Ausweichrouten möglich. Außerdem kann hierbei die Berechnung von Ausweichrouten rechtzeitig vor dem Eindringen in den verbotenen Luftraum erfolgen. Zur automatischen Wahl möglichst vorteilhafter Ausweichrouten kann bei der Weiterbildung vorgesehen sein, dass probehalber mehrere Ausweichrouten mit von Ausweichroute zu Ausweichroute steigender Auslenkung nach anerkannten oder festgelegten Ausweichregeln berechnet werden, dass diejenige berechnete Ausweichroute ausgewählt und in ein Steuerkommando umgesetzt wird, die bei kleinster Auslenkung eine Wahrscheinlichkeit eines Eindringens in den verbotenen Luftraum unterhalb eines vorgegebenen Schwellwertes ergibt.

Um dabei ein Ausweichen in eine möglichst günstige Richtung zu erzielen, kann vorgesehen sein, dass bei Erreichen einer Grenzauslenkung, ohne daß sich die Wahrscheinlichkeit eines Eindringens in den verbotenen Luftraum entsprechend verringert, Ausweichrouten in eine andere Richtung berechnet werden. Schließlich können bei dieser Weiterbildung Gefährdungen durch die Benutzung der Ausweichroute dadurch vermieden werden, dass bei der Berechnung der Ausweichroute ferner Aufenthaltswahrscheinlichkeiten anderer Objekte berücksichtigt werden.

Bei der Annäherung des Luftfahrzeuges an den verbotenen Luftraum und bei Anwesenheit von anderen Objekten erhebt sich die Frage einer Priorität bei der Berechnung der Ausweichroute. Zur Lösung dieses Problems kann bei der Weiterbildung vorgesehen sein, dass für Raumelemente, die in einem Randbereich um den verbotenen Luftraum liegen, die Aufenthaltswahrscheinlichkeiten auf einen geringeren Wert als der verbotene Luftraum gesetzt sind. Die Wahrscheinlichkeitswerte können beispielsweise zwischen 0,2 und 1 liegen.

Eine vorteilhafte Ausgestaltung des erfindungsgemäßen Sicherheitssystems besteht darin, dass für den Piloten ein Warnsignal ausgegeben wird, wenn sich das Luftfahrzeug einem verbotenen Luftraum nähert. Das Warnsignal kann optisch und/oder akustisch ausgegeben werden. Ferner kann vorgesehen sein, dass für den Piloten ein Warnsignal ausgegeben wird, wenn das Sicherheitssystem die automatische Steuerung des Luftfahrzeugs übernimmt.

Bei einer anderen vorteilhaften Ausgestaltung ist vorgesehen, dass verbotene Lufträume auf einem Bildschirm, vorzugsweise auf einem Navigationsdisplay, und die gegebenenfalls berechnete Ausweichroute dargestellt werden.

Um Einrichtungen zur Flugsicherung oder andere zuständige Stellen und Behörden ausreichend zu informieren, kann bei dem erfindungsgemäßen Sicherheitssystem vorgesehen sein, dass die Position des Luftfahrzeugs, der Luftraum und die gegebenenfalls vorhandene Ausweichroute auf einer Anzeigevorrichtung angezeigt werden.

### Kurze Beschreibung der Zeichnungen

Ausführungsbeispiele der Erfindung sind in der Zeichnung anhand mehrerer Figuren dargestellt und in der nachfolgenden Beschreibung näher erläutert. Es zeigt:
- Fig. 1: bis Fig. 4 verschiedene kartographische Darstellungen mit jeweils einem verbotenen Flugraum,
- Fig. 5: ein Blockschaltbild eines erfindungsgemäßen Sicherheitssystems,
- Fig. 6: ein Beispiel für die Belegung von Raumelementen mit Aufenthaltswahrscheinlichkeiten von oben und
- Fig. 7: in Seitenansicht.

### Wege zur Ausführung der Erfindung

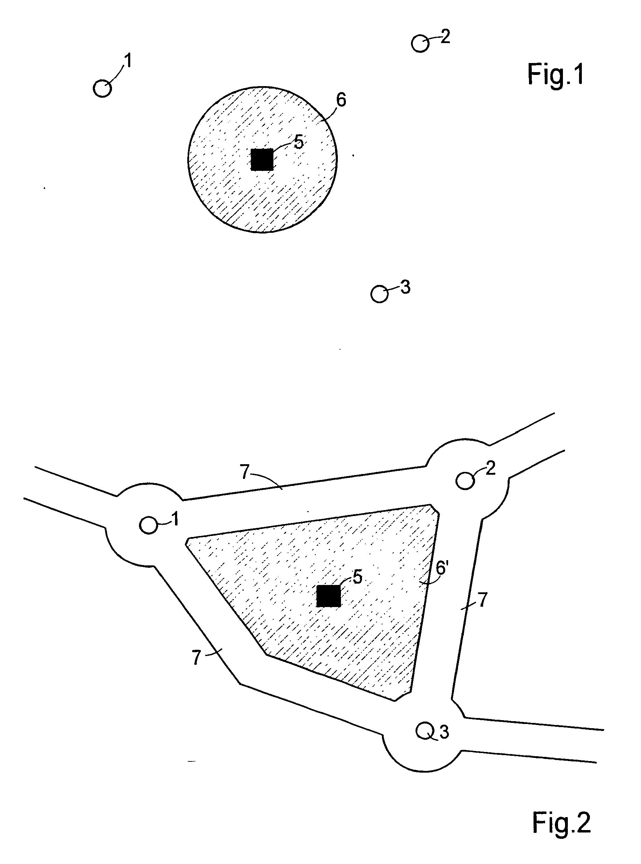

Fig. 1 zeigt einen im weiteren nicht dargestellten Ausschnitt aus einer Landkarte mit Flughäfen 1, 2, 3 und einem zu schützenden Objekt 5. Um das zu schützende Objekt 5 befindet sich ein verbotener Luftraum 6, der bei dem Ausführungsbeispiel nach Fig. 1 einen kreisförmigen Querschnitt aufweist und eine Höhe aufweist, welche ausreicht, um ein Überfliegen mit in Frage kommenden Luftfahrzeugen oder ein Überfliegen in zu geringer Höhe zu verhindern.

Während bei dem Beispiel nach Fig. 1 eine Annäherung des zu schützenden Objektes 5 auf weniger als den Radius des verbotenen Luftraums 6 verhindert wird, wird bei dem Ausführungsbeispiel nach Fig. 2 ein Abweichen von Luftstraßen 7 in Richtung auf das zu schützende Objekt 5 vermieden. Dazu nimmt der verbotene Luftraum 6' praktisch die gesamte Fläche zwischen den Luftstraßen 7 ein.

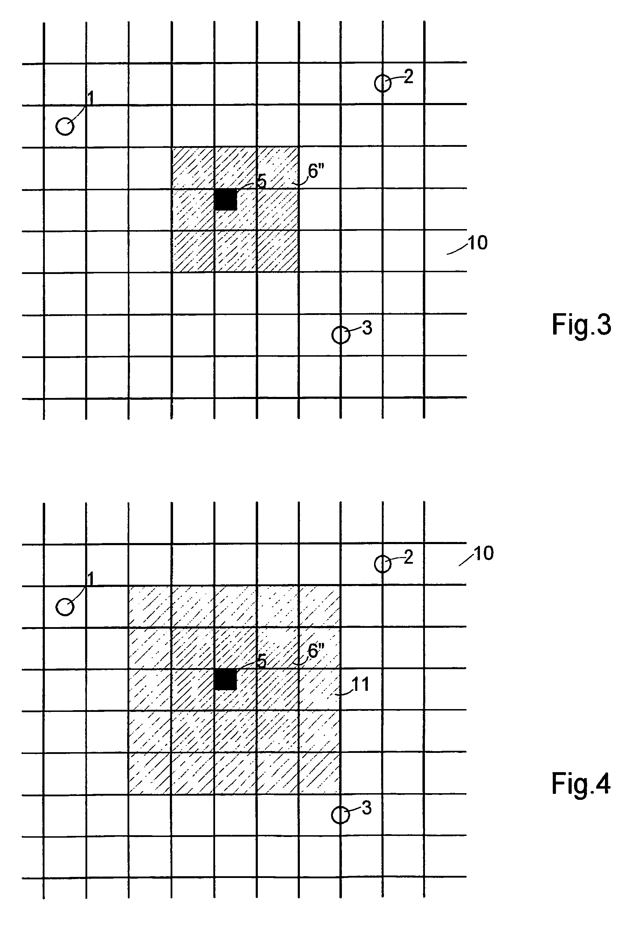

Bei den Ausführungsbeispielen nach den Figuren 3 und 4 ist der Luftraum in Raumelemente 10 aufgeteilt, für die in einer Datenbank Werte für eine Aufenthaltswahrscheinlichkeit von Objekten abgelegt sind, mit denen ein Luftfahrzeug kollidieren kann. Befindet sich in einem Raumelement tatsächlich ein Objekt, so ist die Wahrscheinlichkeit 1. Bei bewegten Objekten wird die Wahrscheinlichkeit, dass sie sich zu vorgegebenen Zeitpunkten in den jeweiligen Raumelementen befinden, berechnet. Einzelheiten hierzu sind in den obengenannten Patenten angegeben.

Bei dem erfindungsgemäßen Sicherheitssystem werden bei den in den Figuren 3 und 4 dargestellten Ausführungsbeispielen Raumelemente, in welche ein Luftfahrzeug nicht eindringen soll, mit einer hohen Wahrscheinlichkeit, vorzugsweise 1, belegt. Ferner ist eine Zwangssteuerung auf eine Ausweichroute vorgesehen. Für das jeweils "eigene" Luftfahrzeug werden für die innerhalb der vorgegebenen Zeiten mit dem Luftfahrzeug erreichbaren Raumelemente die eigenen Aufenthaltswahrscheinlichkeiten berechnet. Gibt es ein Raumelement, für welches die Wahrscheinlichkeit, dass sich sowohl das eigene Luftfahrzeug als auch das andere Objekt dort befinden, einen vorgegebenen Schwellwert überschreitet, wird eine Ausweichroute eingeschlagen. Im erfindungsgemäßen Sicherheitssystem wird durch die Vorgabe einer hohen Wahrscheinlichkeit in dem verboteten Luftraum 6" vorgetäuscht, dass sich dort ein Objekt befindet.

Bei dem in Fig. 4 dargestellten Ausführungsbeispiel weist der verbotene Luftraum 6" einen Rand 11 auf, der in Fig. 4 weniger dicht schraffiert ist. Die Raumelemente dieses Randes sind mit einer geringeren Aufenthaltswahrscheinlichkeit belegt, so dass im Falle von Problemen bei der Ermittlung einer gefahrlosen Ausweichroute - beispielsweise wegen anderer Luftfahrzeuge - der Randbereich 11 noch beflogen werden kann.

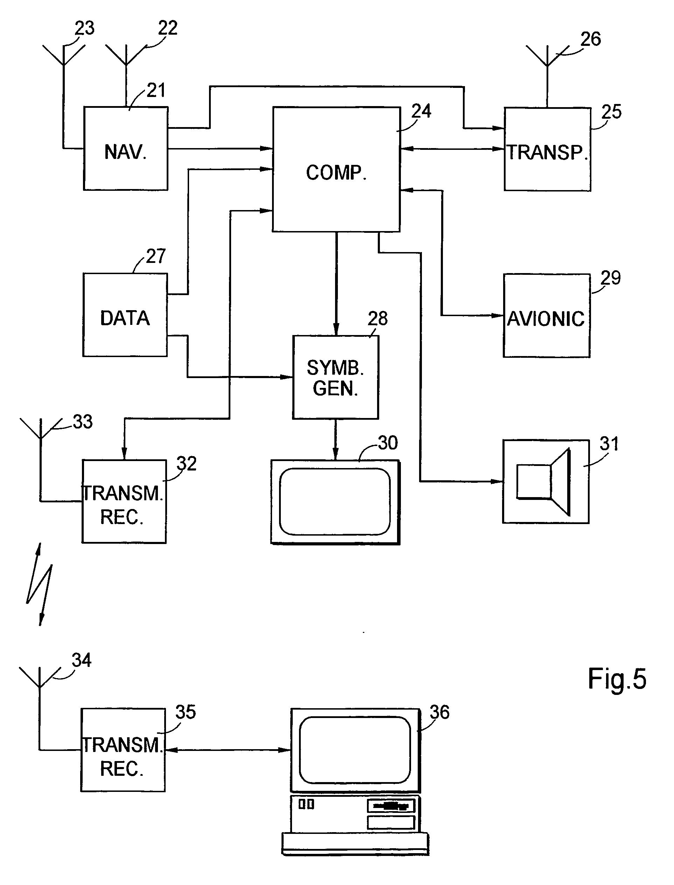

Die in Fig. 5 dargestellte Einrichtung besteht aus mehreren Einheiten, deren Funktion als solche grundsätzlich bekannt ist und die deshalb im einzelnen nicht weiter beschrieben wird. Eine Navigationseinheit 21 ist mit zwei Antennen 22, 23 versehen und empfängt Signale eines GNS-Systems, wie beispielsweise des Global Positioning Systems. Dabei ist die Antenne 22 zum Empfang von Satellitensignalen eingerichtet, während über die Antenne 23 Differenzsignale zur Erhöhung der Genauigkeit der Positionsbestimmung empfangen werden können. In der Navigationseinheit 21 befinden sich noch weitere zur Navigation erforderliche Einrichtungen, beispielsweise ein Kompaß und ein Höhenmesser. Aus den empfangenen Daten und den Signalen des Kompasses und des Höhenmessers berechnet die Navigationseinheit die Position und Lage des Luftfahrzeugs sowie die Änderungen dieser Daten, insbesondere die Fluggeschwindigkeit, die Kursänderungsgeschwindigkeit und die Steig/Sink-Geschwindigkeit.

Diese Daten werden einem Hauptcomputer 24 zugeleitet, der über eine bidirektionale Datenverbindung mit einem Transponder 25 verbunden ist. Dieser ist eine Sende/Empfangs-Einheit mit einer oder mehreren Antennen 26 zum Austausch von Daten mit anderen Luftfahrzeugen, Bodenstationen und Fahrzeugen. Derartige Datenübertragungssysteme sind an sich bekannt und brauchen im Zusammenhang mit der vorliegenden Erfindung nicht näher erläutert zu werden. Ein für das erfindungsgemäße Verfahren geeignetes System ist beschrieben im Tagungsband: The International Air Transport Association, Global Navcom '94, Genf, 18. bis 21. Juli 1994, J. Nilsson, Swedavia: "The Worldwide GNSS-Time Synchronized Self-Organising TDMA Data Link - A Key to the Implementation of Cost-Effective GNSS-Based CNS/ATM Systems!"

Auch ein Traffic Collision Avoidance System (TCAS II) kann für die Ermittlung der relativen Position eines anderen Luftfahrzeugs genutzt werden.

Sollte es im Einzelfall zweckmäßig sein, kann die Übertragung der von der Navigationseinheit 21 erzeugten Daten, soweit sie zur Übertragung zu anderen Luftfahrzeugen vorgesehen sind, auch unmittelbar zum Transponder 25 erfolgen.

Die dargestellte Einrichtung umfaßt ferner eine Datenbank 27, in der unter anderem kartographische Daten zu dem Gelände abgelegt sind, beispielsweise auch die in den Figuren 3 und 4 dargestellten verbotenen Lufträume. Da die Berechnung der Aufenthaltswahrscheinlichkeit der anderen Luftfahrzeuge vom Typ des jeweils anderen Luftfahrzeugs abhängig gemacht werden kann, können in der Datenbank 27 auch dazu erforderliche Daten der relevanten Luftfahrzeuge gespeichert werden. Solche Daten beschreiben im wesentlichen die Bewegungsfähigkeit des Luftfahrzeugs, wie beispielsweise die maximale Beschleunigung und die engsten Kurvenradien. Die in der Datenbank 27 gespeicherten Daten sind vom Hauptcomputer 24 entsprechend des jeweiligen Bedarfs abrufbar. Soweit die Daten unmittelbar zur graphischen Darstellung mit Hilfe des Displays 30 vorgesehen sind, können sie auch direkt einem Symbolgenerator 28 zugeleitet werden.

Der Hauptcomputer 24 ist ferner mit anderen Computern des Avionik-Systems 29 des Luftfahrzeugs verbunden, um für die Berechnung der Aufenthaltswahrscheinlichkeiten und der Ausweichrouten erforderliche Daten abfragen zu können und um die zum automatischen Befliegen der Ausweichrouten erforderlichen Steuerbefehle umzusetzen. Ferner ist an den Hauptcomputer 24 ein Audiosystem zu Zwecken einer Sprachausgabe angeschlossen.

Die bisher beschriebenen Einrichtungen sowie ein Sender/Empfänger 32 mit einer Antenne 33 befinden sich im Luftfahrzeug. Der Sender/Empfänger 32 bildet eine Funkverbindung zu einer Bodenstation, bestehend aus ebenfalls einer Antenne 34 und einem Sender/Empfänger 35. Dieser ist mit einem Computer 36 einer Überwachungseinrichtung, beispielsweise der Flugsicherung, verbunden. Sobald mit dem erfindungsgemäßen System die Wahrscheinlichkeit eines Eindringens in den verbotenen Luftraum erkannt und eine Ausweichroute berechnet wird, erfolgt eine Meldung dieses Zustandes an die Bodenstation, wobei alle zur Beurteilung der Lage erforderlichen Flugdaten auf dem Bildschirm des Computers 36 sichtbar gemacht werden. Vom Sicherheitspersonal können nunmehr geeignete Maßnahmen eingeleitet werden, beispielsweise die Steuerung des Luftfahrzeugs zur nächsten geeigneten Landebahn oder Anweisungen an andere Luftfahrzeuge, sich aus dem betroffenen Luftraum zu entfernen bzw. diesen zu meiden.

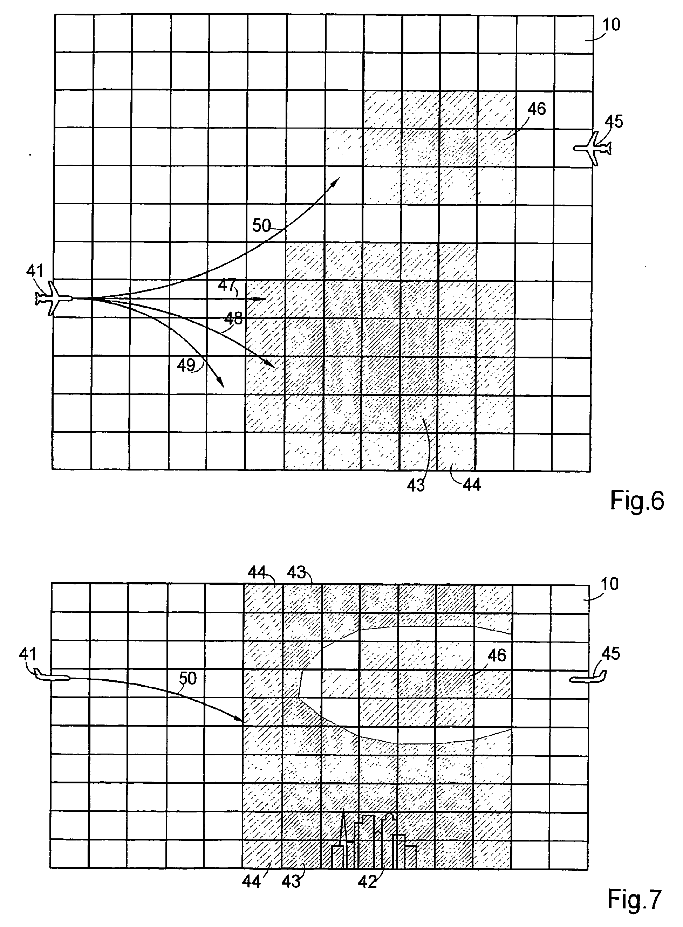

Die Figuren 6 und 7 zeigen jeweils einen Teil des Luftraums - Fig. 6 als Draufsicht, Fig. 7 als Seitenansicht. Ein Luftfahrzeug 41 tritt in den Luftraum ein. Innerhalb des Luftraums liegt ein zu schützendes Objekt 42 mit einem verbotenen Luftraum, der durch engere Schraffierung dargestellt ist und einen Randbereich 44 aufweist. Der verbotene Luftraum 43 und der Randbereich 44 reichen bis in eine für die in Frage kommenden Luftfahrzeuge erreichbare Höhe. Ein weiteres Luftfahrzeug 45 tritt aus entgegengesetzter Richtung in den Luftraum ein. Wahrscheinlichkeiten, mit welchen sich das Luftfahrzeug 45 zu dem betrachteten Zeitpunkt in Raumelementen 46 aufhält, sind ebenfalls durch eine Schraffur hervorgehoben, deren Dichte umso größer ist, je größer die Wahrscheinlichkeit ist. Um in Fig. 7 den Blick auf die Raumelemente 46 freizugeben, ist die Schraffur des verbotenen Luftraums 43 und des Randbereichs 44 entsprechend unterbrochen. Der Übersichtlichkeit halber wurden die Aufenthaltswahrscheinlichkeiten des Luftfahrzeugs 41 nicht dargestellt.

Es folgt eine Erläuterung der Bestimmung einer Ausweichroute, wobei in einem vorangegangenen Schritt das Risiko einer "Kollision" mit dem verbotenen Luftraum dadurch erkannt wurde, dass die Kollisions-Wahrscheinlichkeit für ein oder mehrere Raumelemente einen zulässigen Wert überschreitet, wenn das Luftfahrzeug 41 die Route 47 befliegt und somit eine hohe Wahrscheinlichkeit besteht, dass das Luftfahrzeug 41 in den verbotenen Luftraum 43, mindestens jedoch in den Randbereich 44 eindringt.

Entsprechend den allgemeinen Ausweichregeln werden probehalber Ausweichrouten 48, 49 berechnet mit dem Ergebnis, dass die Route 48 ein Eindringen in den verbotenen Luftraum nicht verhindert und die Route 49 eine zu hohe Drehgeschwindigkeit erfordert und deswegen nicht benutzt wird. Daraufhin wird eine Route 50 berechnet, die jedoch bei gleichbleibender Höhe eine Kollisionsgefahr mit dem anderen Luftfahrzeug 45 bedeutet. Um diese zu umgehen, wird bei dem dargestellten Ausführungsbeispiel zusätzlich zur Kursänderung eine Verringerung der Flughöhe vorgenommen (Fig. 7), so dass das Luftfahrzeug 41 den verbotenen Luftraum 43, ohne eine gefährliche Annäherung an das Luftfahrzeug 45 umgehen kann.

## Patentansprüche

1. Sicherheitssystem für Luftfahrzeuge, wobei in einem digital gespeicherten Abbild des Luftraums verbotene Lufträume (6, 6', 6", 43) **gekennzeichnet** sind, in die Luftfahrzeuge nicht eindringen dürfen, wobei das Luftfahrzeug (41) mit einer automatischen Steuerungseinrichtung (24, 29) versehen ist, wobei die Steuerungseinrichtung (24, 29) bei Annäherung an einen verbotenen Luftraum (6, 6', 6", 43) das Luftfahrzeug (41) automatisch auf eine Ausweichroute (50) steuert, die außerhalb des verbotenen Luftraums (6, 6', 6", 43) liegt, und wobei die Höhe des verbotenen Luftraums (6, 6', 6", 43) größer als die von dem Luftfahrzeug erreichbare Höhe ist.

2. Sicherheitssystem nach Anspruch 1, **dadurch gekennzeichnet, dass** die automatische Steuerung nur nach Eingabe eines Befehls aktiviert wird und dass eine Deaktivierung der automatischen Steuerung nur in gesicherter Weise möglich ist.

3. Sicherheitssystem nach einem der vorhergehenden Ansprüche, **dadurch gekennzeichnet, dass** eine Deaktivierung der automatischen Steuerung nur durch eine außerhalb des Luftfahrzeugs (41) befindliche Einrichtung (36) möglich ist.

4. Sicherheitssystem nach einem der vorhergehenden Ansprüche, **dadurch gekennzeichnet, dass** eine Deaktivierung der automatischen Steuerung nur am Boden möglich ist.

5. Sicherheitssystem nach einem der vorhergehenden Ansprüche, **dadurch gekennzeichnet, dass** die automatische Steuerung eine automatische Landung einschließt.

6. Sicherheitssystem nach Anspruch 5, **dadurch gekennzeichnet, dass** der Ort der automatischen Landung von einer außerhalb des Luftfahrzeugs (41) befindlichen Einrichtung (36) vorgebbar ist.

7. Sicherheitssystem nach einem der vorhergehenden Ansprüche, **dadurch gekennzeichnet, dass** die Steuerung auf der Ausweichroute (50) von einer außerhalb des Luftfahrzeugs (41) befindlichen Einrichtung (36) übernehmbar ist.

8. Sicherheitssystem nach einem der vorhergehenden Ansprüche, **dadurch gekennzeichnet, dass** bei einer Aktivierung der automatischen Steuerung eine Nachricht an eine Einrichtung (36) zur Flugsicherung gesendet wird.

9. Sicherheitssystem nach einem der vorhergehenden Ansprüche, **dadurch gekennzeichnet, dass** eine automatische Steuerung ebenfalls erfolgt, wenn eine Annäherung an bewegliche Objekte (45) stattfindet.

10. Sicherheitssystem nach einem der vorhergehenden Ansprüche, **dadurch gekennzeichnet, dass** das Luftfahrzeug ferner bei Annäherung an andere Objekte, insbesondere andere Luftfahrzeuge, automatisch auf eine Ausweichroute gesteuert wird.

11. Sicherheitssystem nach einem der vorhergehenden Ansprüche, **dadurch gekennzeichnet,**
- **dass** der Luftraum in vorgegebene Raumelemente (10) eingeteilt ist,
- **dass** für das Luftfahrzeug (41) Wahrscheinlichkeiten berechnet werden, mit welchen sich das Luftfahrzeug (41) zu mehreren ausgewählten Zeitpunkten in vorgegebenen Raumelementen befinden wird (Aufenthaltswahrscheinlichkeiten),
- **dass** aus den Aufenthaltswahrscheinlichkeiten des Luftfahrzeugs (41) und aus auf Eins gesetzten Aufenthaltswahrscheinlichkeiten der Raumelemente des verbotenen Luftraums (43) die Wahrscheinlichkeiten des Aufenthalts des Luftfahrzeugs (41) in jeweils einem Raumelement (Kollisionswahrscheinlichkeiten) für die vorgegebenen Raumelemente (10) und die ausgewählten Zeitpunkte berechnet werden und
- **dass** eine Ausweichroute (50) berechnet wird, wenn für mindestens ein Raumelement (10) die Kollisionswahrscheinlichkeit einen vorgegebenen Wert übersteigt.

12. Sicherheitssystem nach Anspruch 11, **dadurch gekennzeichnet, dass** probehalber mehrere Ausweichrouten (47, 48, 49, 50) mit von Ausweichroute zu Ausweichroute steigender Auslenkung nach anerkannten oder festgelegten Ausweichregeln berechnet werden, dass diejenige berechnete Ausweichroute (50) ausgewählt und in ein Steuerkommando umgesetzt wird, die bei kleinster Auslenkung eine Wahrscheinlichkeit eines Eindringens in den verbotenen Luftraum (43) unterhalb eines vorgegebenen Schwellwertes ergibt.

13. Sicherheitssystem nach einem der Ansprüche 11 oder 12, **dadurch gekennzeichnet, dass** bei Erreichen einer Grenzauslenkung, ohne daß sich die Wahrscheinlichkeit eines Eindringens in den verbotenen Luftraum (43) entsprechend verringert, Ausweichrouten (50) in eine andere Richtung berechnet werden.

14. Sicherheitssystem nach einem der Ansprüche 11 bis 13, **dadurch gekennzeichnet, dass** bei der Berechnung der Ausweichroute (50) ferner Aufenthaltswahrscheinlichkeiten anderer Objekte (45) berücksichtigt werden.

15. Sicherheitssystem nach einem der Ansprüche 11 bis 14, **dadurch gekennzeichnet, dass** für Raumelemente, die in einem Randbereich (44) um den verbotenen Luftraum (43) liegen, die Aufenthaltswahrscheinlichkeiten auf einen geringeren Wert als der verbotene Luftraum (43) gesetzt sind.

16. Sicherheitssystem nach einem der vorhergehenden Ansprüche, **dadurch gekennzeichnet, dass** für den Piloten ein Warnsignal ausgegeben wird, wenn sich das Luftfahrzeug (41) einem verbotenen Luftraum (43) nähert.

17. Sicherheitssystem nach einem der vorhergehenden Ansprüche, **dadurch gekennzeichnet, dass** für den Piloten ein Warnsignal ausgegeben wird, wenn das Sicherheitssystem die automatische Steuerung des Luftfahrzeugs (41) übernimmt.

18. Sicherheitssystem nach einem der vorhergehenden Ansprüche, **dadurch gekennzeichnet, dass** verbotene Lufträume (43) auf einem Bildschirm (30), vorzugsweise auf einem Navigationsdisplay, und die gegebenenfalls berechnete Ausweichroute (50) dargestellt werden.

19. Sicherheitssystem nach einem der vorhergehenden Ansprüche, **dadurch gekennzeichnet, dass** die Position des Luftfahrzeugs (41), der Luftraum und die gegebenenfalls vorhandene Ausweichroute (50) auf einer Anzeigevorrichtung (30, 36) angezeigt werden.

## Claims

1. Safety system for aircraft, with forbidden air spaces (6, 6', 6", 43) being identified in a digitally stored image of the air space, which aircraft must not enter, with the aircraft (41) being provided with an automatic control device (24, 29), with the control device (24, 29) automatically controlling the aircraft (41) onto an escape route (50) on approaching a forbidden air space (6, 6', 6", 43), which escape route (50) is located outside the forbidden air space (6, 6', 6", 43), and with the height of the forbidden air space (6, 6', 6", 43) being greater than the height which can be reached by the aircraft.

2. Safety system according to Claim 1, **characterized in that** the automatic control is activated only after inputting a command, and **in that** the automatic control can be deactivated only in a safe manner.

3. Safety system according to one of the preceding claims, **characterized in that** the automatic control can be deactivated only by a device (36) which is located outside the aircraft (41).

4. Safety system according to one of the preceding claims, **characterized in that** the automatic control can be deactivated only on the ground.

5. Safety system according to one of the preceding claims, **characterized in that** the automatic control includes automatic landing.

6. Safety system according to Claim 5, **characterized in that** the location of the automatic landing can be predetermined by a device (36) which is located outside the aircraft (41).

7. Safety system according to one of the preceding claims, **characterized in that** the control on the escape route (50) can be taken over by a facility (36) which is located outside the aircraft (41).

8. Safety system according to one of the preceding claims, **characterized in that**, when the automatic control is activated, a message is sent to an air traffic control facility (36).

9. Safety system according to one of the preceding claims, **characterized in that** automatic control is likewise carried out on approaching moving objects (45).

10. Safety system according to one of the preceding claims, **characterized in that** the aircraft is also automatically controlled onto an escape route while approaching other objects, in particular other aircraft.

11. Safety system according to one of the preceding claims, **characterized**
- **in that** the air space is subdivided into predetermined space elements (10),
- **in that** the probabilities with which the aircraft (41) will be located in predetermined space elements at a plurality of selected times are calculated for the aircraft (41) (location probabilities),
- **in that** the probabilities of the aircraft (41) being located in in each case one space element (collision probabilities) for the predetermined space elements (10) and the selected times are calculated from the location probabilities of the aircraft (41) and from location probabilities, set to unity, of the space elements of the forbidden air space (43), and
- **in that** an escape route (50) is calculated when the collision probability for at least one space element (10) exceeds a predetermined value.

12. Safety system according to Claim 11, **characterized in that** a plurality of escape routes (47, 48, 49, 50) with an increasing direction change from escape route to escape route are calculated on a sample basis using recognized or defined escape rules, **in that** the calculated escape route (50) which is selected and is implemented as a control command is that which, with the minimum direction change, results in the probability of entering the forbidden air space (43) being below a predetermined threshold value.

13. Safety system according to one of Claims 11 or 12, **characterized in that**, on reaching a limiting direction change without the probability of entering the forbidden air space (43) being correspondingly reduced, escape routes (50) are calculated in a different direction.

14. Safety system according to one of Claims 11 to 13, **characterized in that** location probabilities of other objects (45) are also taken into account when calculating the escape route (50).

15. Safety system according to one of Claims 11 to 14, **characterized in that** the location probabilities for space elements which are located in an edge area (44) around the forbidden air space (43) are set to a lower value than the forbidden air space (43).

16. Safety system according to one of the preceding claims, **characterized in that** a warning signal is emitted for the pilots when the aircraft (41) is approaching a forbidden air space (43).

17. Safety system according to one of the preceding claims, **characterized in that** a warning signal is emitted for the pilots when the safety system takes over automatic control of the aircraft (41).

18. Safety system according to one of the preceding claims, **characterized in that** forbidden air spaces (43) are displayed on a screen (30), preferably on a navigation display, and the possibly calculated escape route (50).

19. Safety system according to one of the preceding claims, **characterized in that** the position of the aircraft (41), the air space and the escape route (50) which may be provided are displayed on a display apparatus (30, 36).

## Revendications

1. Système de sécurité pour aéronefs, dans lequel des espaces aériens interdits (6, 6', 6", 43) dans lesquels les aéronefs ne peuvent pénétrer sont identifiés dans une représentation de l'espace aérien conservée numériquement en mémoire, l'aéronef (41) étant doté d'un dispositif (24, 29) de pilotage automatique, le dispositif de pilotage (24, 29), lorsque l'on s'approche d'un espace aérien interdit (6, 6', 6", 43), amenant automatiquement l'aéronef (41) sur une trajectoire d'évitement (50) située à l'extérieur de l'espace aérien interdit (6, 6', 6", 43), l'altitude de l'espace aérien interdit (6, 6', 6", 43) étant supérieure à l'altitude que peut atteindre l'aéronef.

2. Système de sécurité selon la revendication 1, **caractérisé en ce que** le pilotage automatique est n'activé qu'après introduction d'un ordre et **en ce que** la désactivation du pilotage automatique n'est possible qu'en mode sécurisé.

3. Système de sécurité selon l'une des revendications précédentes, **caractérisé en ce que** la désactivation du pilotage automatique n'est permise que par un dispositif (36) situé à l'extérieur de l'aéronef (41).

4. Système de sécurité selon l'une des revendications précédentes, **caractérisé en ce que** la désactivation du pilotage automatique n'est permise qu'au sol.

5. Système de sécurité selon l'une des revendications précédentes, **caractérisé en ce que** le pilotage automatique inclut un atterrissage automatique.

6. Système de sécurité selon la revendication 5, **caractérisé en ce que** le site d'atterrissage automatique peut être prédéterminé par un dispositif (36) situé à l'extérieur de l'aéronef (41).

7. Système de sécurité selon l'une des revendications précédentes, **caractérisé en ce que** le pilotage vers la trajectoire d'évitement (50) peut être repris par un dispositif (36) situé à l'extérieur de l'aéronef (41).

8. Système de sécurité selon l'une des revendications précédentes, **caractérisé en ce que** lorsque le pilotage automatique est activé, un message est envoyé à un dispositif (36) de sécurisation de vol.

9. Système de sécurité selon l'une des revendications précédentes, **caractérisé en ce que** le pilotage automatique a également lieu dans le cas de l'approche d'objets mobiles (45).

10. Système de sécurité selon l'une des revendications précédentes, **caractérisé en ce que** l'aéronef est en outre piloté automatiquement vers une trajectoire d'évitement en cas d'approche d'autres objets, en particulier d'autres aéronefs.

11. Système de sécurité selon l'une des revendications précédentes, **caractérisé en ce que**
- l'espace aérien est divisé en éléments spatiaux (10) prédéterminés,
- les probabilités auxquelles l'aéronef (41) se trouvera en plusieurs instants sélectionnés dans des éléments spatiaux prédéterminés (probabilités de présence) sont calculées pour l'aéronef (41),
- à partir des probabilités de présence de l'aéronef (41) et de probabilités de présence fixées à un dans les éléments spatiaux de l'espace aérien interdit (43), les probabilités de la présence de l'aéronef (41) dans chaque élément spatial (probabilités de collision) sont calculées aux instants sélectionnés pour les éléments spatiaux (10) prédéterminés et
- une trajectoire d'évitement (50) est calculée lorsque la probabilité de collision dans au moins un élément spatial (10) dépasse une valeur prédéterminée.

12. Système de sécurité selon la revendication 11, **caractérisé en ce que** plusieurs trajectoires d'évitement (47, 48, 49, 50) dont l'évitement augmente d'une trajectoire d'évitement à l'autre sont calculées par sondage en fonction de règles d'évitement reconnues ou imposées et **en ce que** la trajectoire d'échappement (50) calculée qui donne pour résultat pour le plus petit évitement une probabilité de pénétration dans l'espace aérien interdit (43) inférieure à une valeur de seuil prédéterminée est sélectionnée et convertie en une commande de pilotage.

13. Système de sécurité selon l'une des revendications 11 ou 12, **caractérisé en ce que** lorsque l'on atteint un évitement limite sans que la probabilité de pénétrer dans l'espace aérien interdit (43) diminue de manière appropriée, des trajectoires d'évitement (50) sont calculées dans une autre direction.

14. Système de sécurité selon l'une des revendications 11 à 13, **caractérisé en ce que** dans le calcul de la trajectoire d'évitement (50), on tient compte en outre des probabilités de présence d'autres objets (45).

15. Système de sécurité selon l'une des revendications 11 à 14, **caractérisé en ce que**, pour des éléments spatiaux situés dans une zone de bordure (44) qui entoure l'espace aérien interdit (43), les probabilités de présence sont fixées à une valeur plus petite que dans l'espace aérien interdit (43).

16. Système de sécurité selon l'une des revendications précédentes, **caractérisé en ce qu'**un signal d'avertissement est délivré aux pilotes lorsque l'aéronef (41) s'approche d'un espace aérien interdit (43).

17. Système de sécurité selon l'une des revendications précédentes, **caractérisé en ce qu'**un signal d'avertissement est délivré aux pilotes lorsque le système de sécurité assure le pilotage automatique de l'aéronef (41).

18. système de sécurité selon l'une des revendications précédentes, **caractérisé en ce que** les espaces aériens interdits (43) sont représentés sur un écran (30), de préférence un écran de navigation, de même que la trajectoire d'évitement (50) éventuellement calculée.

19. Système de sécurité selon l'une des revendications précédentes, **caractérisé en ce que** la position de l'aéronef (41), l'espace aérien et la trajectoire d'évitement (50) éventuellement présente sont affichés sur un dispositif d'affichage (30, 36).
